# EUROPÄISCHE PATENTSCHRIFT

(11) **EP 0 856 097 B1**
(45) Veröffentlichungstag und Bekanntmachung des Hinweises auf die Patenterteilung: **24.04.2002**
(21) Anmeldenummer: 97914047.2
(22) Anmeldetag: 09.01.1997
(51) Int. Cl.: F02B 37/007, F02B 37/12, F02B 37/18

(54) **ANORDUNG ZUM ERKENNEN VON DREHZAHLABWEICHUNGEN ZWISCHEN ZWEI ABGASTURBOLADERN**
ARRANGEMENT FOR RECOGNIZING DIFFERENCES IN RPM BETWEEN TWO EXHAUST GAS TURBOCHARGERS
SYSTEME POUR DETECTER DES ECARTS DE REGIME ENTRE DEUX TURBOCOMPRESSEURS

(30) Priorität: 17.04.1996 DE 19615033
(43) Veröffentlichungstag der Anmeldung: 05.08.1998
(73) Patentinhaber: ROBERT BOSCH GMBH, 70442 Stuttgart (DE)
(72) Erfinder: SCHRAY, Bernhard, D-71739 Oberriexingen (DE); HÄMING, Werner, D-74861 Neudenau (DE); BÄUERLE, Michael, D-71706 Markgröningen (DE)
(86) Internationale Anmeldenummer: DE9700029
(87) Internationale Veröffentlichungsnummer: WO9739231

(56) Entgegenhaltungen:
- WO-A-90/03503
- DE-C- 19 513 156
- US-A- 4 292 806
- PATENT ABSTRACTS OF JAPAN vol. 015, no. 232 (M-1124), 13.Juni 1991 & JP 03 070821 A (MAZDA MOTOR CORP), 26.März 1991,

## Beschreibung

### Stand der Technik

Die vorliegende Erfindung betrifft eine Anordnung zum Erkennen von Drehzahlabweichungen zwischen zwei Abgasturboladern einer aus zwei getrennten Zylinderbänken bestehenden Brennkraftmaschine, wobei zu jeder Zylinderbank ein Abgastrakt mit einer Abgasturbine gehört.

Aus der internationalen Anmeldung WO 90/03503 ist ein V-Motor bekannt, der aus zwei Zylinderbänken besteht und für jede Zylinderbank einen Abgasturbolader aufweist. Es ist eine Ladedruckregelung vorgesehen, die dafür sorgen soll, daß in den Saugtrakten beider Zylinderblöcke gleiche Drucke vorherrschen. In Abhängigkeit von den in beiden Saugtrakten gemessenen Drücken werden die Drehzahlen der in den Abgastrakten der beiden Zylinderblöcke angeordneten Abgasturbinen so geregelt, daß die Drücke in den beiden Saugtrakten gleich groß sind. Die Regelung der Drehzhalen der Abgasturbinen erfolgt über Bypass-Ventile.

Tritt in einem der beiden Abgastrakte ein Fehler auf, z. B. ein Verstopfen des Katalysators, ein Defekt des Ladedruckreglers oder eine Störung der Abgasturbine etc., so macht sich das durch unterschiedliche Drehzahlen der beiden Abgasturbolader bemerkbar. Eine Drehzahlabweichung zwischen beiden Abgasturboladern weist also auf irgendeinen Defekt hin, der evtl. zu Folgeschäden an einem der beiden Abgasturbolader führen kann.

Um rechtzeitig Defekte erkennen zu können und daraufhin Maßnahmen einzuleiten zur Vermeidung von kostspieligen Folgeschäden, soll eine Anordnung zum Erkennen von Drehzahlabweichungen zwischen den zwei Abgasturboladern einer aus zwei getrennten Zylinderbänken bestehenden Brennkraftmaschine angegeben werden.

### Vorteile der Erfindung

Gemäß den Merkmalen des Anspruchs 1 besteht diese Anordnung aus einer Vorrichtung, welche die Differenz zwischen den in den beiden Abgastrakten vor den Abgasturbinen vorherrschenden Drücken oder Gasmassen (bzw.-mengen) ermittelt. Es wird dann eine Drehzahlabweichung zwischen den Abgasturboladern signalisiert, wenn die ermittelte Differenz eine vorgebbare Schwelle überschreitet. Die Druckverhältnisse oder Gasmassen- bzw. Gasmengenverhältnisse in den Abgastrakten der beiden Zylinderbänke liefern eine zuverlässige Aussage darüber, ob eine relevante Drehzahlabweichung zwischen den zwei Abgasturboladern vorliegt.

Gemäß den Unteransprüchen kann die Schwelle für die gemessene Druckdifferenz bzw. die Differenz der Gasmassen (bzw. -mengen) von der Luftmasse (bzw. -menge) im Saugrohr oder von der Drehzahl und/oder der Last des Motors abhängen.

Wenn dann eine Drehzahlabweichung erkannt worden ist, können verschiedene Maßnahmen eingeleitet werden, die größere Schäden an den Abgasturboladern vermeiden. Entweder wird der Regelkreis für die Abgasturbolader unterbrochen und dafür eine Stellgröße bereitgestellt, oder es wird eine zylinderselektive Einspritzausblendung veranlaßt, oder es wird die Maximalöffnung der Drosselklappe begrenzt.

### Beschreibung von Ausführungsbeispielen

Anhand zweier in der Zeichnung dargestellter Ausführungsbeispiele wird nachfolgend die Erfindung näher erläutert. Es zeigen:
Figur 1 ein Blockschaltbild einer Brennkraftmaschine mit zwei Abgasturboladern, wobei für die Erkennung von Drehzahlabweichungen zwischen den Abgasturboladern die Drücke in den beiden Abgastrakten gemessen werden,
Figur 2 ein Blockschaltbild eines Motors mit zwei Abgasturboladern, wobei für die Erkennung von Drehzahlabweichungen die Gasmassen (bzw. -mengen) in den beiden Abgastrakten gemessen werden.

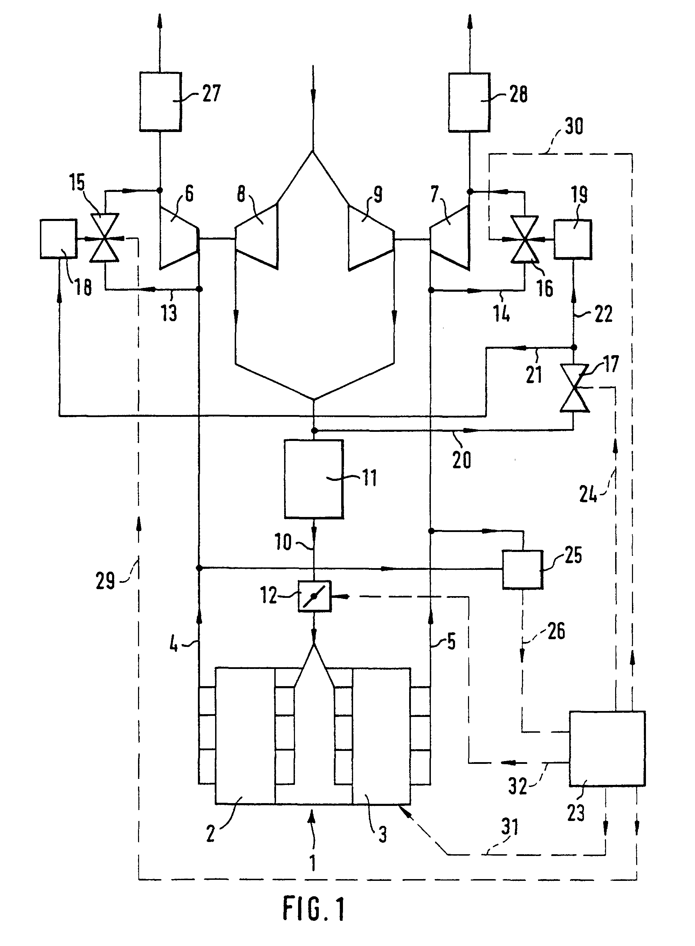

In der Figur 1 ist schematisch ein V- oder Boxermotor (1), bestehend aus zwei Zylinderbänken (2,3) dargestellt. Jede Zylinderbank (2,3) besitzt einen eigenen Abgastrakt (4,5). In jedem Abgastrakt (4,5) ist eine Abgasturbine (6,7) eines Abgasturboladers installiert. Die Abgasturbine (6) im Abgastrakt (4) treibt einen Lader (8), und die Abgasturbine (7) im Abgastrakt (5) treibt einen Lader (9) an. Die beiden Lader (8,9) verdichten die Ansaugluft im Ansaugtrakt (10), der in dem dargestellten Ausführungsbeispiel aus einem Rohr besteht, in dem ein Ladeluft-Kühler (11) und eine Drosselklappe (12) angeordnet sind. Hinter der Drosselklappe (12) verzweigt sich das Ansaugrohr (10) auf die beiden Zylinderbänke (2,3). Das gemeinsame Ansaugrohr (10) verzweigt sich auf die Eingänge der beiden parallel geschalteten Lader (8,9), und die Ausgäng der beiden Lader (8,9) sind vor dem Ladeluft-Kühler (11) zusammengeführt. Statt für beide Zylinderbänke (2,3) einen gemeinsamen Ansaugtrakt vorzusehen, kann auch jede Zylinderbank (2,3) einen eigenen Ansaugtrakt aufweisen, in dem der zugehörige Lader (8,9) die Ansaugluft verdichtet.

Die Abgasturbinen (6,7) sind jeweils mit einer Bypassleitung (13,14) ausgestattet. Mit einem in der Bypassleitung (13,14) vorhandenen Ventil (15,16)ist die Bypassdurchflußrate und damit die Drehzahl der Abgasturbine (6,7) und in Folge davon der vom Lader (8,9) erzeugte Ladedruck im Ansaugtrakt einstellbar. Für die Ladedruckregelung bzw.-steuerung ist ein Stellglied vorgesehen, das in dem in Figur 1 dargestellten Ausführungsbeispiel in bekannter Weise aus einem Taktventil (17) und einer Druckdose (18,19) besteht, welche über eine Gestänge die Öffnung des Bypass-Ventils (15,16) einstellt. Das Taktventil (17) wird über eine an den Ansaugtrakt angeschlossene Leitung (20) direkt mit dem von den beiden Ladern (8,9) erzeugten Ladedruck beaufschlagt. Wegen des einen gemeinsamen Ansaugtraktes (10) ist auch nur ein Taktventil (17) erforderlich, dessen Ausgangsdruck über die Leitungen (21,22) zu gleichen Teilen auf die Druckdosen (18,19) für die beiden Abgasturbolader aufgeteilt wird. Das Taktventil (17) erhält von einem Steuergerät (23) über eine Leitung (24) ein pulsweitenmoduliertes Steuertaktsignal.

Ein Drucksensor (25) mißt die Drücke in den beiden Abgastrakten (4,5) vor den Abgasturbinen (6,7) und ermittelt daraus den Differenzdruck, den er über eine Leitung (26) als elektrisches Signal dem Steuergerät (23) zuführt. Ein Differenzdruck wird sich immer dann einstellen, wenn die Drehzahlen der beiden Turbolader voneinander abweichen. Eine Drehzahlabweichung tritt dann auf, wenn beispielsweise die Druckdose (18,19) oder das Bypass-Ventil (15,16) oder die Abgasturbine (6,7) eines Abgasturboladers defekt ist oder wenn ein im Ausgangsrohr der Abgasturbine (6,7) befindlicher Katalysator (27,28) verstopft ist.

Das Steuergerät (23) vergleicht die Druckdifferenz in den beiden Abgastrakten (4,5) mit einer vorgebbaren Schwelle und signalisiert erst dann eine relevante Drehzahlabweichung zwischen den beiden Abgasturboladern, wenn die Druckdifferenz diese Schwelle übersteigt. Eine über die Schwelle hinausgehende Druckdifferenz deutet darauf hin, daß in irgendeinem Abgastrakt ein Deffekt vorliegt, der einen größeren Schaden eines der beiden Abgastrbolader nach sich ziehen kann. Würde nämlich die Drehzahl eines Abgasturboladers aufgrund eines Fehlers absinken, würde die Ladedruckregelung die Drehzahl des anderen Abgasturboladers so weit hochfahren, daß er den fehlenden Ladedruck des defekten Abgasturboladers kompensiert. Die überhöhte Drehzahl könnte aber zu einer Zerstörung des Abgasturboladers führen.

Das Steuergerät (23) wird auch nur dann eine Drehzahlabweichung zwischen den Abgasturboladern signalisieren, wenn die Druckdifferenz die vorgegebene Schwelle nicht nur kurzzeitig, sondern über eine vorgebbare längere Zeit überschreitet, weil eine kurzzeitige Drehzahlabweichung wohl noch keine Folgeschäden bei einem der Abgasturboladern nach sich ziehen würde.

Die Schwelle für die Druckdifferenz kann entweder in Abhängigkeit von der Luftmasse (bzw. -menge) im Saugrohr oder in Abhängigkeit von der Drehzahl und/oder der Last des Motors vorgegeben werden. Je geringer die Luftmasse (bzw.menge) im Saugrohr oder die Drehzahl oder die Last des Motors ist, desto niedriger ist die Schwelle zu legen, damit schon geringere Drehzahlabweichungen zwischen den Abgasturboladern erkannt werden. Wenn ein hoher Ladedruck von einem der beiden Abgasturbolader aufgebracht werden muß, weil der andere defekt ist, so wird der funktionsfähige Abgasturbolader ohne Ergreifen einer besonderen Schutzmaßnahme in einen gefährlichen Drehzahlbereich hochgeregelt. Wird also die Drehzahlabweichung frühzeitig erkannt, weil die Schwelle dafür niedriger liegt, so wird eine oder mehrere der nachfolgend aufgeführten Schutzmaßnahmen rechtzeitig eingeleitet noch bevor der funktionsfähige Abgasturbolader in einen gefährlich hohen Drehzahlbereich aufgeregelt worden ist.

Eine der genannten Schutzmaßnahmen besteht darin, daß das Steuergerät (23) bei einer erkannten Drehzahlabweichung den Ladedruckregelkreis unterbricht und eine Stellgröße über die Leitung (29) oder (30) dem Bypass-Ventil (15 oder 16) zuführt. Die Stellgröße für das Bypass-Ventil (15,16) kann aus einem Drehzahl- und lastabhängigen Kennfeld entnommen werden. Jedenfalls ist die Stellgröße so dimmensioniert, daß die Abgasturbine (6,7) in einem unschädlichen Drehzahlbereich bleibt.

Eine zweite Schutzmaßnahme besteht darin, daß das Steuergerät (23) bei einer erkannten Drehzahlabweichung über eine Steuerleitung (31) eine zylinderselektive Einspritzausblendung veranlaßt. Durch Einspritzausblendungen wird nämlich das Abgas mit Frischgas verdünnt, wodurch sich die Entalpie des Abgases verringert. Dadurch wird das Lastniveau der Brennkraftmaschine heruntergefahren und entsprechend der erforderliche Ladedruck heruntergeregelt. Damit besteht nicht mehr die Gefahr, daß einer der Abgasturbolader in einen zu hohen Drehzahlbereich gelangt.

In einer dritten Schutzmaßnahme wird das Lastniveau der Maschine dadurch auf einen geringeren Wert beschränkt, daß das Steuergerät (23) über eine Leitung (32) ein Steuersignal abgibt, welches die Maximalöffnung der Drosselklappe (12) begrenzt.

Jede dieser Schutzmaßnahmen kann allein oder es können auch mehrere Schutzmaßnahmen zusammen getroffen werden. Dabei kann für jede Schutzmaßnahme eine andere Schwelle für den Differenzdruck vorgegeben werden.

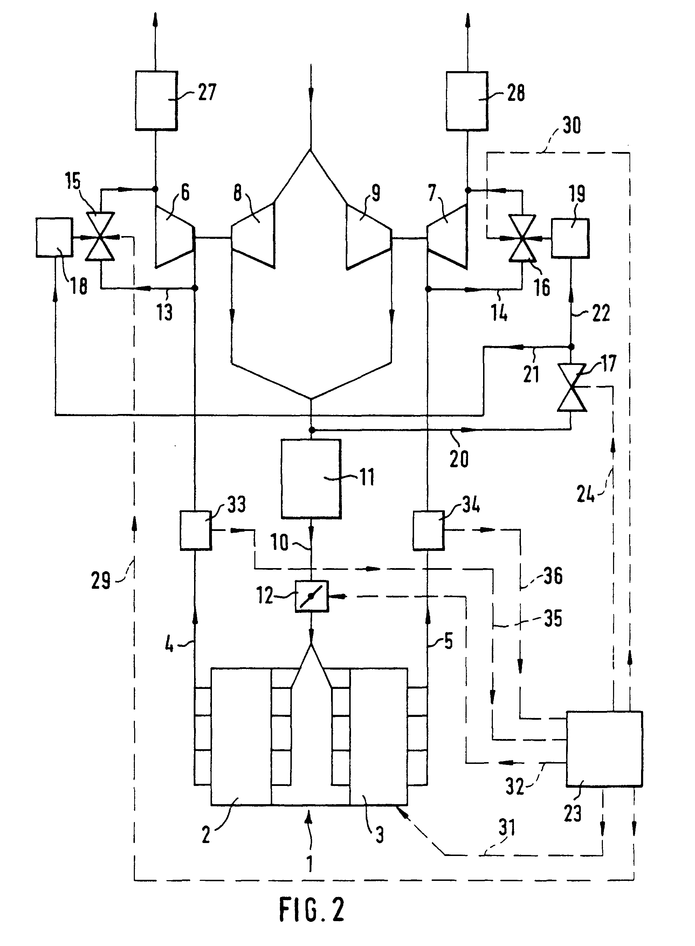

Anstatt wie im vorangehend beschriebenen Ausführungsbeispiel die Druckdifferenz in den beiden Abgastrakten (4,5) als Kriterium für das Erkennen einer Drehzahlabweisung zwischen den beiden Abgasturboladern heranzuziehen, kann auch die Differenz zwischen den in beiden Abgastrakten (4,5) gemessenen Gasmassen bzw. -mengen von dem Steuergerät (23) für eine Drehzahlabweichung ausgewertet werden. Dazu sind in dem in Figur 2 dargestellten Ausführungsbeispiel in die Abgastrakte (4,5) Meßgeräte (33,34) für Gasmassen oder - mengen eingefügt, deren Ausgangssignale über die Leitungen (35,36) dem Steuergerät (23) zugeführt sind. Ansonsten gleicht dieses zweite Ausführungsbeispiel der in Figur 1 dargestellten Anordnung, worauf gleiche Bezugszeichen hinweisen.

## Patentansprüche

1. Anordnung zum Erkennen von Drehzahlabweichungen zwischen zwei Abgasturboladern einer aus zwei getrennten Zylinderbänken bestehenden Brennkraftmaschine, wobei zu jeder Zylinderbank ein Abgastrakt mit einer Abgasturbine gehört, **dadurch gekennzeichnet, daß** eine Vorrichtung (23,25,33,34) vorhanden ist, welche die Differenz zwischen den in den beiden Abgastrakten (4,5) vor den Abgasturbinen (6,7) vorherrschenden Drücken oder Gasmassen bzw. -mengen ermittelt und eine Drehzahlabweichung signalisiert, wenn die ermittelte Differenz eine vorgebbare Schwelle überschreitet.

2. Anordnung nach Anspruch 1, **dadurch gekennzeichnet, daß** dann eine Drehzahlabweichung signalisiert wird, wenn die ermittelte Differenz die Schwelle eine vorgebbare Zeit lang überschreitet.

3. Anordnung nach Anspruch 1, **dadurch gekennzeichnet, daß** die Schwelle von der Luftmasse (bzw. -menge) im Saugrohr (10) abhängt.

4. Anordnung nach Anspruch 1, **dadurch gekennzeichnet, daß** die Schwelle von der Drehzahl und/oder der Last des Motors abhängt.

5. Anordnung nach einem der Ansprüche 1 bis 4, **dadurch gekennzeichnet, daß** sie bei einer erkannten Drehzahlabweichung eine Stellgröße für einen zu jedem Abgasturbolader gehörenden Ladedruckregler (15,16) bereitsstellt und daß die Stellgröße aus einem Drehzahl- und lastabhängigen Kennfeld entnommen ist.

6. Anordnung nach einem der Ansprüche 1 bis 4, **dadurch gekennzeichnet, daß** sie bei einer erkannten Drehzahlabweichung eine zylinderselektive Einspritzausblendung veranlaßt.

7. Anordnung nach einem der Ansprüche 1 bis 4, **dadurch gekennzeichnet, daß** sie bei einer bekannten Drehzahlabweichung eine Begrenzung der Maximalöffnung der Drosselklappe (12) veranlaßt.

## Claims

1. Arrangement for detecting rotational-speed deviations between two exhaust turbochargers of an internal combustion engine comprising two separate banks of cylinders, each bank of cylinders having associated with it an exhaust duct with an exhaust turbine, **characterized in that** there is a device (23, 25, 33, 34) that determines the difference between the pressures or masses or quantities of gas prevailing in the two exhaust ducts (4, 5) upstream of the exhaust turbines (6, 7) and indicates a rotational-speed deviation if the difference determined exceeds a predeterminable threshold.

2. Arrangement according to Claim 1, **characterized in that** a rotational-speed deviation is indicated if the difference determined exceeds the threshold for a predeterminable length of time.

3. Arrangement according to Claim 1, **characterized in that** the threshold depends on the mass (or quantity) of air in the intake pipe (10).

4. Arrangement according to Claim 1, **characterized in that** the threshold depends on the rotational speed and/or load of the engine.

5. Arrangement according to one of Claims 1 to 4, **characterized in that**, in the event of a rotational-speed deviation being detected, it provides a manipulated variable for a boost-pressure controller (15, 16) belonging to each exhaust turbocharger and **in that** the manipulated variable is taken from a rotational-speed- and load-dependent characteristic map.

6. Arrangement according to one of Claims 1 to 4, **characterized in that** it initiates cylinder-selective suppression of injection in the event of a rotational-speed deviation being detected.

7. Arrangement according to one of Claims 1 to 4, **characterized in that** it initiates limitation of the maximum opening of the throttle valve (12) in the event of a rotational-speed deviation being detected.

## Revendications

1. Dispositif de détection d'écarts de régime entre deux turbocompresseurs de gaz d'échappement d'un moteur à combustion interne comprenant deux bancs cylindres distincts, chaque banc ayant une tubulure d'échappement équipée d'une turbine à gaz d'échappement,
**caractérisé par**
un dispositif (23, 25, 33, 34) qui détermine la différence entre les pressions ou masses ou quantités de gaz dans les deux tubulures de gaz d'échappement (4, 5) en amont des turbines à gaz (6, 7) et signale un écart de régime si la différence obtenue dépasse un seuil donné.

2. Dispositif selon la revendication 1,
**caractérisé en ce qu'**
on signale un écart de régime si la différence obtenue dépasse le seuil pendant un temps donné.

3. Dispositif selon la revendication 1,
**caractérisé en ce que**
le seuil est une fonction de la masse ou de la quantité d'air dans la tubulure d'admission (10).

4. Dispositif selon la revendication 1,
**caractérisé en ce que**
le seuil est une fonction du régime et/ou de la charge du moteur.

5. Dispositif selon l'une quelconque des revendications 1 à 4,
**caractérisé en ce qu'**
en cas d'écart de régime, il fournit une grandeur de réglage pour l'un des deux régulateurs de pression d'alimentation (15, 16) des turbocompresseurs de gaz d'échappement et cette grandeur de réglage est prise dans un champ de caractéristiques dépendant du régime et de la charge.

6. Dispositif selon l'une quelconque des revendications 1 à 4,
**caractérisé en ce qu'**
il commande une suppression d'injection sélective par cylindre en cas de détection d'un écart de régime.

7. Dispositif selon l'une quelconque des revendications 1 à 4,
**caractérisé en ce qu'**
il commande une limitation de l'ouverture maximale du volet d'étranglement (12) en cas de détection d'un écart de régime.
